# EUROPEAN PATENT SPECIFICATION

(11) **EP 3 571 557 B1**
(45) Date of publication and mention of the grant of the patent: **24.07.2024**
(21) Application number: 17709241.8
(22) Date of filing: 20.02.2017
(51) Int. Cl.: G05B 19/418, G05B 17/02, G05B 19/042

(54) **PROGRAMMING IN SIMULATION FOR PROCESS INDUSTRY**
PROGRAMMIERUNG IN SIMULATION FÜR PROZESSINDUSTRIE
PROGRAMMATION EN SIMULATION POUR L'INDUSTRIE DU PROCESSUS

(43) Date of publication of application: 27.11.2019
(73) Proprietor: Siemens Aktiengesellschaft, 80333 München (DE)
(72) Inventor: MCDANIEL, Richard Gary, Hightstown, New Jersey 08520 (US)
(74) Representative: Horn Kleimann Waitzhofer Schmid-Dreyer Patent- und Rechtsanwälte PartG mbB
(86) International application number: PCT/US2017/018559
(87) International publication number: WO 2018/151734

(56) References cited:
- WO-A1-2016/053337
- US-A1- 2005 096 872
- US-A1- 2012 029 661

## Description

### TECHNICAL FIELD

This application relates to process industries. More particularly, this application relates to simulation and automation of processes in process industries.

### BACKGROUND

The process industry focuses on automation that creates, transforms, or otherwise manipulates continuous substances such as liquids or gases. Process industry is distinguishable from discrete automation where a multitude of individual, albeit separate objects are manipulated. An example of a process is mixing liquids to produce a chemical reaction. On the other hand, an example of discrete automation is drilling holes in a car part. A process may be performed in batches, in which substances are stored in containers such as tanks or reactor vessels. The substances may be piped from one container to another in order to allow performance of the process steps. Furthermore, a process may also be continuous, where the automation devices operate on constantly flowing substances. By way of example, a liquid may be piped into a chiller and cooled, mixed with another fluid, and then piped to another facility for further processing without ever being stored in local container. WO 2016/053337 discloses a method for programming automation systems using a three-dimensional graphical interface which employs tightly coupled logic and physical simulation techniques. Logical and physical components reside in the same workspace and can be edited, modified, and executed in an ad hoc manner. US 2005/0096872 A1 discloses the use of smart process objects, which have both graphical and simulation elements, in creating one or more graphic displays and one or more process simulation modules, each having elements which may communicate with one another and with devices within a process plant to model and depict the operation of a process plant.

Types of devices used to control a process may include vessels such as tanks and/or reactors. Additional devices may be included that direct the flow of the material between vessels and may include by way of example, pipe, valves, and pumps. Other devices may be used that physically manipulate the material, such as a stirring paddle or a centrifuge. Moreover, sensing devices may detect material properties such as temperature, pH, color, viscosity, pressure, among other properties.

Conventionally, programming a process-related application involves using a recipe-style program. These programs are commonly written in a Sequential Function Chart (SFC) programming language. The SFC code is a low-level programming language similar to a flow chart or Relay Ladder Logic diagram and does not include indications of the task being programmed in expression of the code. The code is essentially just a list of commands that are expressible as electrical signals provided to the process equipment. Whether or not the signals perform actual desired behaviors may not be ascertained from within the programming tool itself.

The recipe abstraction used to program a process application includes multiple abstraction layers. These abstraction layers are defined by certain standards (e.g., ISA-88). A common abstraction layer that conventional programming methods allow is programming equipment phases at the electrical signal level. However, higher level abstractions, such as programming at the operational or procedural level, are unachievable due to their deeper complexity.

Process applications frequently involve manipulation of fluids. Fluid simulation may be used to simulate how liquids and gases in a process application behave under varying conditions. There are many examples of simulation tools that range from programming languages with application programming interfaces (APIs) that calculate simulation steps, to stand alone tools that graphically depict devices and functions within a particular process. A typical fluid simulation is "one-dimensional" meaning that the simulation is specified as a set of connected functions that combine to calculate details of a simulated process. A one-dimensional simulation has limitations for example, not using relative positioning of the graphical depictions of the simulation's objects and how those relative positions affect the state or initial values of the simulation parameters. In some applications a one-dimensional simulation is composed within a graphical screen having two dimensions, so sometimes a 1D simulation is called 2D but the implementation method is the same.

A three-dimensional (3D) simulation of fluids uses the positions of objects in the specification to specify certain implicit parameters of the simulation. For example, the length of pipes, the size of vessels, the position of sensors, along with other features, may be derived from the 3D positions, sizes, and connections of the depicted objects in a simulation. The direction of gravity relative to the simulation depiction is known, for example, so that a liquid in one vessel can be made to flow to another vessel that is beneath the first in height.

Fluid simulation may be based on mass-flow equations, as well as particle-based techniques. A particle-based technique such as Smoothed-Particle Hydrodynamics (SPH) may also be used to simulate a fluid in fine detail. These techniques are used in applications such as movie or animation special effects. However, these techniques can be too slow for real time interactive simulation or real time control of a process. Mass-flow equations, which allow faster calculation can be solved in real time. Nevertheless, it is desirable to also consider non-linear effects such as events or states that occur when liquids are separated or mixed together in order to be most useful for process simulation. Static fluid analyses as described in problems found in textbooks are generally not used to simulate fluids in an arbitrary process but are usually constrained to solve back-of-the envelope (e.g. on the fly) calculations for a specific case.

Improved simulation programming techniques are desired.

### SUMMARY

The invention is defined by the independent claims. More particularly, aspects according to embodiments of the present disclosure include programming automation within the context of a simulated process environment. The particular types of automation may be relevant for the process industry specializing in the manipulation of continuous materials such as fluids. A typical process industry product will manipulate liquids and their byproducts through various chemical, physical, and thermodynamic techniques to render the products into useful forms. Non-limiting examples include cracking crude oil to make petroleum, desalinating water, distilling alcohol, and separating precipitates to make medications.

Other aspects according to embodiments of the present disclosure are directed to a programming in simulation technique. Using a three dimensional simulation of the process including fluid simulation aspects, an automation engineer may generate programs that control process machinery. Normally, processing machines are programmed using low-level electrical signals of the machines' constituent parts via programs similar to state charts, such as State Flow Chart (SFC) or Relay Ladder Logic (RLL). In systems according to aspects of embodiments of this disclosure, physical machines are programmed by specifying how simulated facsimiles of the machines are intended to react in concert with the desired effects on the process materials. The machine activity is modeled explicitly in a realistic manner by the simulation so that errors are less likely and the intended machine behavior is easier to realize.

According to aspects of embodiments of present disclosure an engineering system for programming process applications is provided. Simulation components that represent the physical devices are used in the application. The simulation components represent the actual machines and devices in the process. This representation includes both active devices like valves and pumps, as well as passive devices such as pipes and filters. The components also include representation of the work products of the process such as the fluids (e.g. liquid) and logical elements representing the functions of the program and the simulation of interaction between fluids (e.g., chemical or biological reactions). The simulation of the process and control behavior is always available and can be activated at any time to simulate the functions of the devices. Once the entire function of the application is realized, the result of the simulation may be downloaded to the actual live controllers of the physical devices that cause the physical devices to be programmed to perform those intended functions.

Aspects of embodiments of the disclosure include a method for programming a component of a process plant that includes identifying a plurality of components of the process plant, coupling the process plant to a three-dimensional (3D) simulation system, performing a simulation on a plurality of 3D programmable simulation objects of the 3D simulation system, wherein each of the 3D programmable simulation object includes programming code relating to operation of the 3D programmable simulation object and transferring the programming code at least one of the 3D programmable simulation objects to a corresponding physical component of the process plant.

Aspects of embodiments of this disclosure further include a plurality of components of the processing plant that include control components. The control components may include remotely operable valves, remotely operable pumps, remotely operable heaters, remotely operable and/or remotely operable motors.

According to aspects of a method according to embodiments described in this disclosure coupling the process plant to the 3D simulation system includes, coupling each of a plurality of process plant components to a process control application and establishing a communication path between the process control application and a computer processor of the 3D simulation system, wherein the computer processor of the 3D simulation system is configured to transfer programming code contained in at least one 3D simulation object to a corresponding physical component of the process plant via the communication link and the process control application. In some embodiments, performing a simulation on a plurality of 3D programmable simulation objects comprises defining a programmable 3D simulation object corresponding to each component of the process plant. The plurality of programmable 3D simulation objects may comprise at least one fluid physics object, at least one control object, at least one fluid transport object and/or at least one fluid storage object.

Certain methods according to aspects of embodiments of this disclosure may include arranging, in a 3D simulation workspace, programmable 3D simulation objects corresponding to each component of a process plant so that each 3D simulation object is positioned in the 3D simulation workspace proportional to the physical position of the corresponding component in the process plant.

Certain methods according to aspects of embodiments of this disclosure may include running a simulation application on the programmable 3D simulation objects in the 3D simulation workspace, and altering at least one of a property or programming code of at least one of the programmable 3D simulation objects while the simulation application is running.

Certain methods according to aspects of embodiments of this disclosure may include comparing a result of the simulation application with a desired result, altering the programming code of at least one of the 3D simulation objects based on a difference between the simulation result and the desired result.
According to other aspects of embodiments described herein, a programmable process includes a process plant comprising a plurality of physical process components, a control application in communication with at least one of the plurality of physical process components, and a three-dimensional (3D) simulation system comprising a 3D workspace containing a plurality of programmable 3D simulation objects, each of the plurality of programmable 3D simulation objects corresponding to a physical process component of the process plant, wherein the 3D simulation system is in communication with the control application.

The process plant may include at least one fluid vessel and at least one pipe coupled to the at least one fluid vessel and at least one control device coupled to the at least one pipe configured to control flow of a fluid to or from the at least one fluid vessel via the at least one pipe. The at least one control device includes a remotely operable actuator configured to receive a control signal and responsive to the control signal, alter a state of the control device.

A programmable process plant according to aspects of embodiments of this disclosure further include a programmable 3D simulation object corresponding to a control device of the process plant, the programmable 3D simulation object corresponding to the control device of the process plant comprising programming code, the programming code operative to simulate the operation of the corresponding control device during a simulation operation of the programmable 3D simulation system and wherein the programming code is configured to be transferred to the corresponding control device of the process plant and the programming code being executable by a remotely operable actuator of the control device to alter a state of the control device. The 3D simulation system further includes a second programmable 3D simulation object corresponding to a fluid vessel, the second programmable 3D simulation object comprising programming code containing logic relating to fluid physics and responsive to a simulated movement of the second programmable 3D simulation object, a simulated fluid contained within a simulated fluid vessel associated with the second programmable 3D simulation object moves consistent with the simulated movement of the second programmable 3D simulation object. The control application is configured to receive programmable code from at least one 3D simulation object of the 3D simulation system and transfer the received programmable code to at least one of the physical process components. The received programmable code is operable to simulate the at least one of the physical process components in the 3D simulation system and to provide instructions for operation of the at least one physical process component.

### BRIEF DESCRIPTION OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 is an illustration of a 3D simulation object according to aspects of an embodiment of the disclosure.
FIG. 2 is an illustration of the addition of a 3D fluid object to the 3D simulation object shown in FIG. 1 according to aspects of an embodiment of the disclosure.
FIG. 3 is an illustration of fluid properties associated with a 3D fluid object according to aspects of an embodiment of the disclosure.
FIG. 4 is an illustration of the addition of a pipe or transport object to the 3D simulation object shown if FIG. 1 according to aspects of an embodiment of the disclosure.
FIG. 5 is an illustration of an additional tank and control object to the 3D simulation object of FIG. 1 according to aspects of an embodiment of the disclosure.
FIG. 6 is a block diagram of a relationship between 3D simulation objects according to aspects of an embodiment of the disclosure.
FIG. 7 is a block diagram showing functional relationships of 3D simulation objects according to aspects of an embodiment of the disclosure.
FIG. 8 is a conceptual block diagram of 3D simulation objects representative of a process system according to aspects of an embodiment of the disclosure.
FIG. 9 is an illustration of a 3D simulation object with logical control according to aspects of an embodiment of the disclosure.
FIG. 10 is an illustration of a simulation process system with control programming according to aspects of embodiments of the disclosure.
FIG. 11 is an illustration of the assignment of fluid properties to 3D simulation fluid objects according to aspects of an embodiment of the disclosure.
FIG. 12 is an illustration of the application of customized fluid functions to a 3D simulation fluid object according to an embodiment of the disclosure.
FIG. 13 is an illustration of a programming in simulation system of a process plant according to aspects of an embodiment of the disclosure.

### DETAILED DESCRIPTION

Aspects of embodiments of this disclosure include a method for programming process industry applications using a three-dimensional simulation of the process being implemented. The running of the simulation during programming assists the programming process by allowing the developer to find bugs and better understand the manner in which the process devices function. The simulation of the process material can also be used as part of the control implementation in that the simulated values of the material can be considered part of the state of the program and be used to affect the electrical state of the controlled devices. Since simulation provides such a central role to the development process, the method is called Programming in Simulation. The programming takes place in a 3D virtual replica of the devices being programmed. The developer has access to a library of components that represent the devices. The component can be selected from the library and placed into the 3D space. The component comes preprogrammed with the 3D geometry of the device (in scale), objects that represent the physical interactions of the device with its environment, and control behaviors that the device is able to perform.

### Making a Tank Filled with Water

To demonstrate how aspects of the user interface function, a partial example will be presented. For the first step, a reactor vessel will be created and filled with water. The simulation component objects in the application reflect the main physical devices used by the process. A reactor vessel, for example, is represented by an object that looks and acts like a reactor vessel in the virtual replica or twin.

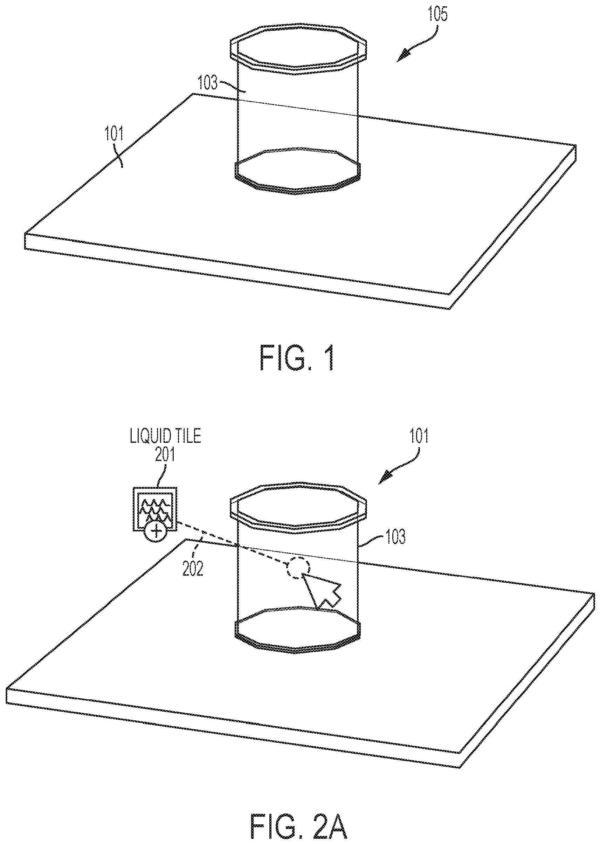

FIG. 1 shows how a reactor vessel may be placed into a workspace. Starting with a space 101 where the reactor needs to be, the user drags out a reactor 103 and places it in that space. In this particular example, the space may start off empty, so any position is generally fine, but in a more detailed example, there will be potentially many tanks and other vessels and the positions of objects will reflect their real physical world positions.

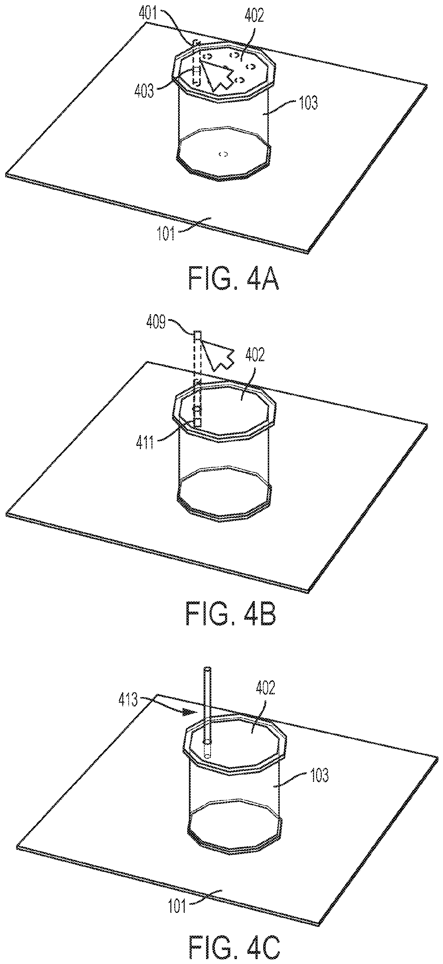

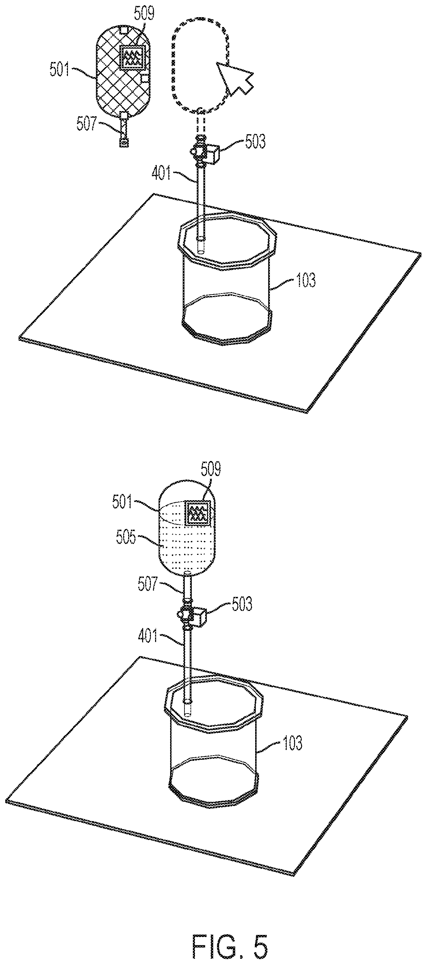

The components need not be complete objects with respect to the final design. In the example shown in FIG. 1, the reactor 103 is open at the top 105 wherein the final process, the reactor has a sealed lid with holes for insertion of piping. In the invention, the reactor 103, the lid (shown in FIGs. 4 and 5), and the inlets (shown in FIGs. 4 and 5) can be separate components that are assembled together to form the final process configuration.

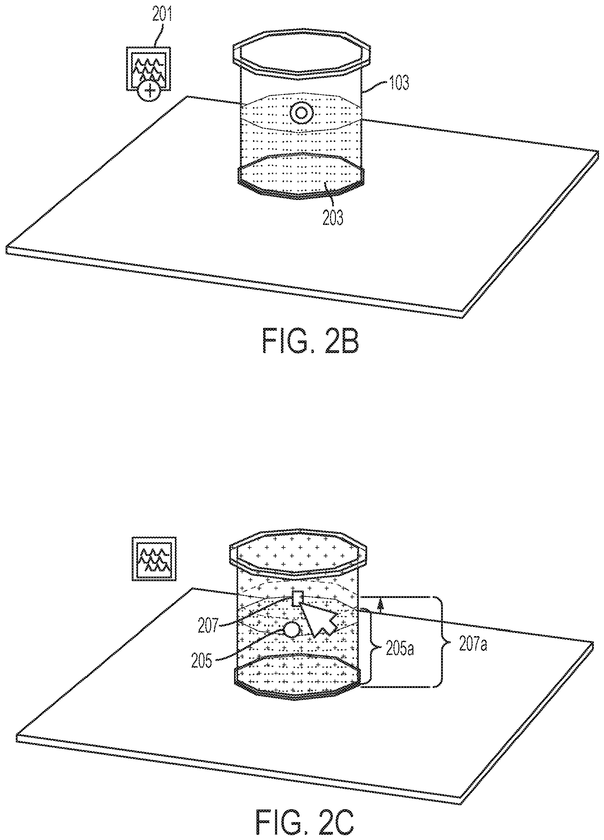

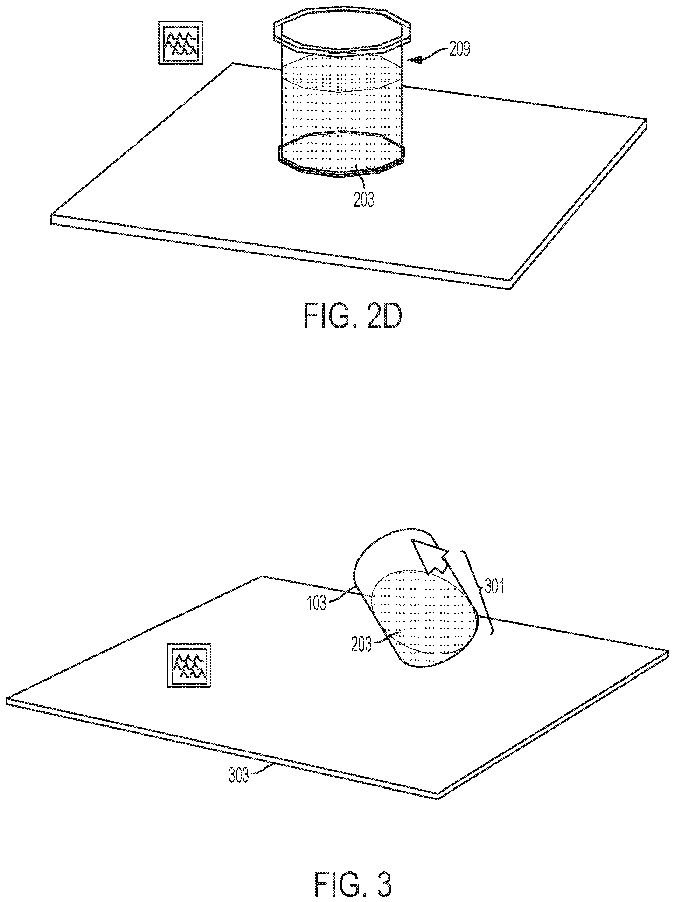

Referring to FIG. 2 at (A), (B), (C), and (D), the reactor 103 is filled with a liquid such as water. The component for water is represented as a logic tile 201 that is dragged into the virtual space 101 like any other component. The tile 201 is represented as a square with wavy lines marked as "Liquid Tile" in FIG. 2 at (A). The programmer assigns the liquid 201 to the reactor 103 by dragging the connector 202 of the liquid tile 201 to the reactor 103 as shown in FIG. 2 at (A) and (B). The liquid 203 is shown in the vessel 103 as a 3D volume. The user may manipulate the amount of liquid 203 in the vessel 103 by dragging a handle 205 when the vessel 103 is selected. The sequence in FIG. 2 at (C) and (D) shows the user dragging the liquid handle 205 upwards to position 207 to raise the level of the liquid 203 from a first depth 205ₐ to a second depth 207ₐ. When the user releases the handle 207, the 3D volume of liquid 203 is shown within the vessel with an increased surface height level shown by 209.

The motion of the liquid 201 in the reactor 103 is also simulated at any time the user activates the "run" mode of the simulation application. The system will automatically incorporate information including how the vessel 103 is moving and how fluids can travel in and out to compute results of how the liquid 201 will behave in view of the inputs. The simulated geometry of the liquid 201 is updated accordingly and animated in real time interactively with the user's inputs and control behavior.

FIG. 3 shows a 3D depiction of the vessel 103 being tilted relative to work surface 303. In FIG. 3, the user drags the movable vessel 103 while the simulation is running. The fluid properties associated with liquid 203 are processed in the simulation along with the motion of the vessel 103 causing the 3D rendering of liquid 203 in the simulation to appear to slosh about as indicated by the inclined surface 301 of the fluid 203 while in run mode.

### Piping Fluids between Components

The system supports creating any component that would be needed to run the process. Multiple vessels may be connected with piping that transports liquids and gasses between different vessels, valves, and process devices. Referring to FIG. 4, a reactor vessel 103 is being tapped by adding an inlet pipe 401 to the reactor's lid 402. The perforation 403 of the lid 402 by the inlet pipe 401 is automatically created when the inlet pipe 401 is placed. The length of the inlet pipe 401 can also be changed by the user dragging handles (409, 411). The lengthened inlet pipe 413 is shown in FIG. 4 at (C). The reactor lid 402, itself, is an optional component and part of the reactor vessel 103 that was snapped into place. A user may also add many other components such as a stirring mechanism, an outlet pipe for draining, and various sensors such as pressure or temperature (not shown).

Referring now to FIG. 5, the simulation application is further extended by adding a second tank 501 and a valve 503 component to control the flow of liquid from the upper tank 501 to the lower reactor 103. The tank 501 and inlet 507 combination were created similarly to the reactor lid 402 and inlet pipe 401 as described before with regard to FIG. 4. Similarly, the tank 501 has liquid 505 in it using the liquid tile 509. The valve 503 and the combination of tank 501 and inlet pipe 507 were connected by dragging the parts together so that their ends were close together. The 3D simulation system then snaps the parts together when the user releases the input device. The connections between the components include all the physical connections of the internal objects of the components going beyond merely the geometric location of the 3D models. In the example of FIG. 5, the reactor 103 and the tank 501 possess fluid 505 holding physics objects (e.g., tanks), and the pipes 507, 401 and valve 503 contain fluid transport physics objects (e.g., pipes). The valve 503 also contains a control node physics object to denote the ability to change the fluid topology of the network. Basically, it can open and close the valve 503 by changing how it affects the piping network. The physics objects are linked together by reference such as the inlet pipe 401 connecting to the reactor tank 103, the inlet pipe 401 connecting to the valve pipe 507 via valve 503, and so forth. These internal connections are automatically established within the simulation environment based on which components are "snapped" together to become attached to adjacent components.

The use of programming objects (e.g., data structures) adds programmable functionality to the 3D simulation objects representing the components of the process plant. The 3D simulation objects are configured to perform simulation of the process, while simultaneously allowing dynamic adjustments to the position, size, contents and other properties of various simulated components. This allows the programmer to run the simulation and at the same time, make adjustments via the data objects associated with the 3D simulation objects. In this way the programmer may observe the results of the simulated operations. When the simulation produces the desired result, the data stored (e.g. state information, programming code) within the control data objects can be directly loaded into the physical process plant providing control instructions from the simulation to the physical control devices in the process plant.

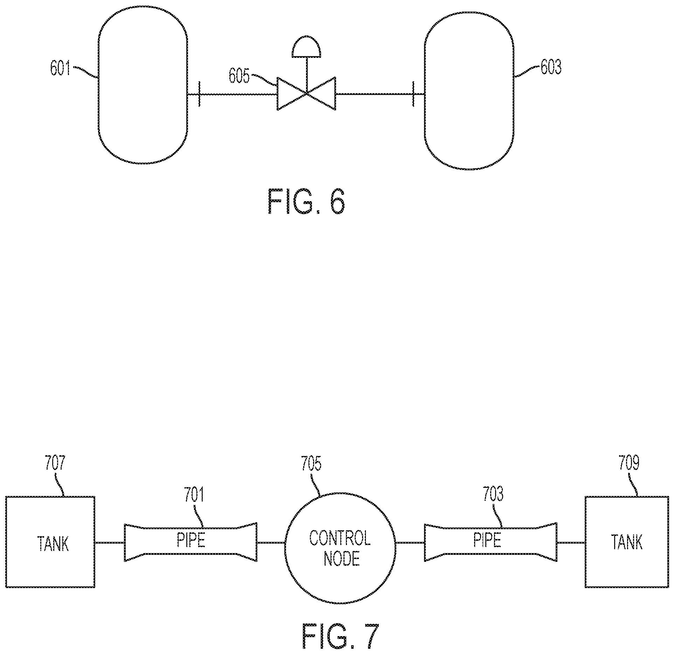

The internal objects that are produced and connected during editing may include physics objects and other semantic objects for describing attributes of physical devices or implementing aspects of the physics simulation. The semantics of the devices could be represented with the diagram, for example, as shown in Figure 6. The user does not need to draw the elements from the figure by hand, nor does the system need to produce the diagram; the diagram represents data that is implicitly represented by the assembly of the 3D components. The diagram is a piping and instrumentation diagram (P&ID) that shows two tanks 601, 603 connected by a solenoid valve 605. This is essentially the same as the 3D construction except that the 3D contains information related to the actual 3D geometry such as the tank sizes, the pipe lengths and turns, and the relative positions of the tanks.

### Structure of Physics Objects

The system can use many internal data structures to represent the 3D components and the materials they contain. The materials are comprised from physics objects that are used to simulate the fluid processes that the devices would handle. For example, the system can use objects to represent the state of the vessels and piping, the state of the fluid materials, and the state of the solvers used to determine the fluid's movement and other characteristics.

In keeping with the example in progress, Figure 7 shows physics objects that could be used to represent the state of the fluid vessels and control functions. In this data, the objects can be similar to the P&ID diagram; though, in this case, the pipe objects 701, 703 are denoted explicitly. The valve is represented by a control node 705 that acts like a junction between pipes 701, 703 except that its state is controlled by an external function such that it regulates flow through that region depending on how far open the valve is set. Other fluid properties such as density, viscosity, temperature, and many others could be potentially changed by applying functions at control nodes or other vessel objects. (e.g. tank 707 and/or tank 709)

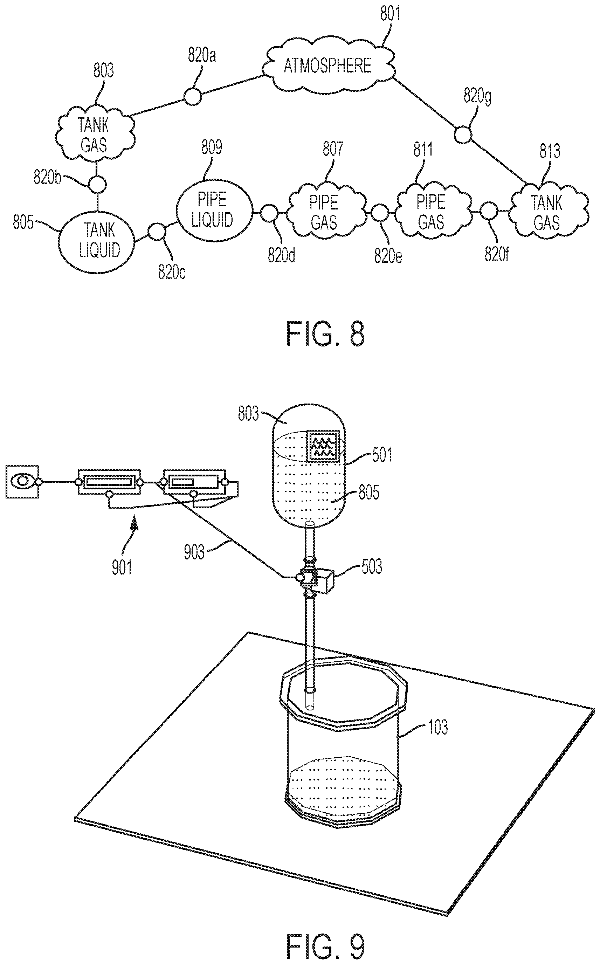

The system may use physics objects to represent the state of the fluids within the vessels. In FIG. 8, a set of objects that may be used to represent the fluid state of the pair of tanks (FIG. 5, 103, 501) being used as the example in FIG. 5. The topmost tank 501 is partially filled with air 803 and water 805, the pipe 507 directly below is mostly filled with air 807 but connects to the water 505 in the tank 501 to make a small liquid drop 809 at the end. The other pipe 401 and tank 103 are filled with air 811, 813. There is also the air surrounding the vessels 801 assuming that the tanks are vented and can exchange gas with the environment. The junctions between fluids are equally important and are marked with circles 820_{a-g} in the diagram. These junctions determine where fluids flow and how to change from containing one fluid to another.

Material physics objects could be created and destroyed dynamically as the fluids are moved nonlinearly around the network. For example, multiple beads of liquid and bubbles of gas may be held in a single pipe and move along its length together. Fluids that find a split in the vessel geometry such as a tee pipe can be split by creating new material objects at the ends of the vessel physics objects. In general, the material objects need not actually be transferred from one vessel to another. Instead, they may be created and destroyed at the ends of vessels with the intermediate objects being resized to represent the change in content.

The material physics objects can be used to generate equations that represent the behavior of the fluids. For example, the set of liquid fluid objects that are adjacent to one another can be collected in a solver and the equations of mass conservation and inertia can be applied to determine how the mass of the liquid would move during a given time step. Similarly, connected gas elements can be collected and equation applied to determine the pressure of the gasses depending on the vessel geometry and volume as well as the rate the volume is changing based on advancing liquids. Solving for these equations may determine the state of the physics objects in the next time step.

Once the new state of the physics objects is determined, the system may reconfigure the geometry of the physics objects. For example, the system may move liquids and gases further down the length of a pipe; increase the volume of liquid in a tank; vent pressure of a gas to the atmosphere; and many other possibilities. Also, the topology of the physics objects may change. For example, a new bead of pipe liquid may be added to the end of a pipe, or the junction between pipes may change from a liquid node to a gaseous node. The topology of the vessel objects may also change. For example, a tank may be disconnected from one pipe and added to another; a tank's vent may be opened or closed, or a valve can change its aperture.

### Programming Automated Behavior

The user can add automation behavior to the application by connecting logical and control elements to the controllable components. The physical components such as valves and sensors can have digitally activated inputs and outputs. For example, the solenoid valve 503 being shown in the set of components in FIG. 5 may have the ability to be turned on and off digitally. When turned off, logical zero, the valve may be closed, and when turned on, logical one, the valve may be open.

In FIG. 9, logic has been added to the valve 503 that controls when the valve is open or closed. In this case, the logic 901 may cause the valve to open for two seconds based on an input signal 903 and then close automatically.

The automation programming can be as complicated as needed to reflect the number and behavior of the devices. The logic would be able to handle sequences of steps; interlocking conditions; calculations of various datatypes; numeric arithmetic; communication with external devices; and all the usual functions that a program can provide.

### External Coordination Functions

In a process, it is common for the control of a particular device or suite of devices to be partially controlled by an external entity such as a dedicated coordination controller. To handle this case, the system can include external control functions whose actions can be initiated by the coordinator at runtime.

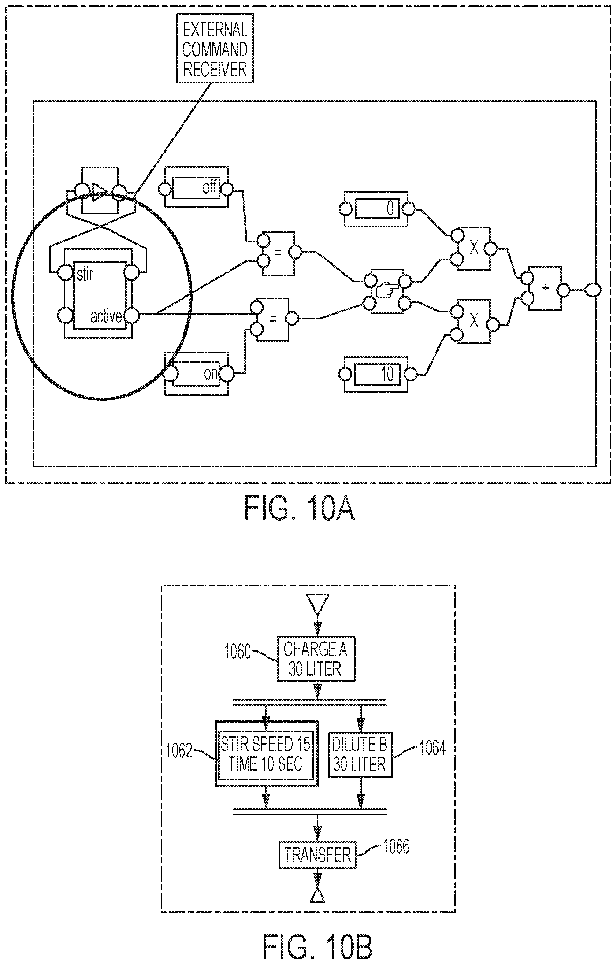

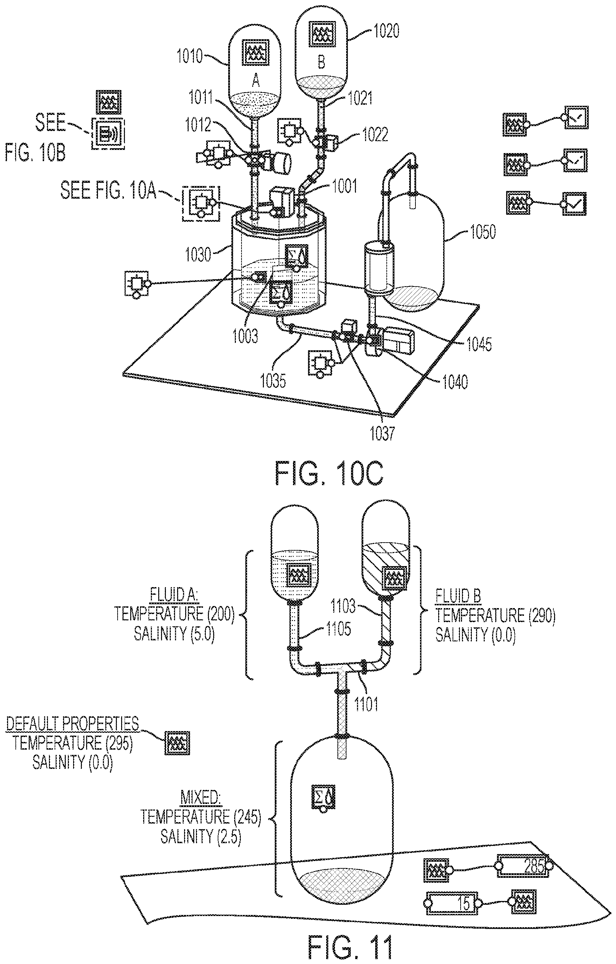

In FIG. 10, the user has set a control function to activate and deactivate the stirring behavior of the device. To receive the external command, the user has added an external command receiver function to the logic that controls the motor 1001 of the stirring device 1003. The code for controlling the stirring state is shown in FIG 10 at (a), the stirring device 1003 with its motor 1001 is shown in FIG. 10 at (c). For simulation purposes, the system can produce simulated external commands using a user-defined queue of commands. The commands can be set up to run like a sequential function chart program (SFC) with some commands being issued sequentially and others in parallel. An example of a set of commands is shown in FIG. 10 at (a) and (b). In simulated testing, the user-defined commands will be used but when the program is deployed on a physical controller, the commands from the actual coordinator would be used.

Referring again to FIG. 10 at (c), an exemplary representation for programming a processing application according to embodiments of the invention is shown. The system comprises a mixing vessel 1030, a first source vessel 1010 for containing a first fluid A, and a second source vessel 1020 containing a second fluid B. The first source vessel 1010 is in fluid communication with mixing vessel 1030 via inlet pipe 1011 and control valve 1012. Second source vessel 1020 is in fluid communication with mixing vessel 1030 via inlet pipe 1021 and control valve 1022. Mixing vessel 1030 comprises a stirring device 1003 which is rotationally coupled to stirring motor 1001.

A receptacle vessel 1050 is in fluid communication with mixing vessel 1030 via outlet piping 1035 from mixing vessel 1030 and inlet piping 1045 to receptacle vessel 1050 via control valve 1037. A pump 1040 may be provided for moving a fluid from mixing vessel 1030 to receptacle vessel 1050. Other components (e.g., filters, reactor chambers, fluidized beds, and the like) may also be connected between mixing vessel 1030 and receptacle vessel 1050.

Control node physics objects may be associated with components, junctions between components, or fluids contained within the processing application of FIG. 10. The control node physics objects digitally represent the physical properties of components and interactions between components. These control node physics objects are programmable and may receive control signals which change states of the control node physics object. Control signals may be provided by local sensors, or may be received by the control node physics object from a remote processing unit in communication with the control node physics object. Control signals may change one or more states of the control node physics objects. Changes in state of one control node object may affect states of other control node physics objects in the system and provide simulated operation of the processing application.

FIG. 10 at (b) provides an example of logic which may be used to control one or more control node physics objects, representing one or more components of a processing application. A control signal 1060 is provided which is associated with the physical act of charging mixing vessel 1030 with 30 liters of fluid A from the first source vessel 1010. Control signal 1060 may be effective to change a state of control valve 1012 between first source vessel 1010 and mixing vessel 1030. For example, control signal may be operable to indicate that control valve 1012 changes from a closed state to an open state. The change in state of valve 1012 from closed to open, causes state changes to occur in other components of the processing application. For example, the opening of control valve 1012 will cause the fluid level of fluid A in first source vessel 1020 to decrease, while the fluid level within mixing vessel 1030 will increase. Likewise, a fluid volumetric flow rate will increase within pipe 1011 between source vessel 1010 and mixing vessel 1030. The system may include control processing that monitors the volumetric flow rate through pipe 1011. When it is determined that a pre-determined volume of fluid A (e.g. 30 liters in control signal 1060) has passed from source vessel 1010 to mixing vessel 1030, a control signal may be provided to change the state of control valve 1012 from open to closed in order to stop the introduction of further amounts of fluid A to the mixing vessel 1030.

When control signal 1060 is completed, control logic may implement additional processing steps that are carried out via additional control signals. As may be seen in FIG. 10 at (b), once control signal 1060 is complete, the control or coordination processor may require that additional control signals be implemented in parallel. A control signal 1062 may be created which changes a state of stirring motor 1001 from off to on. Stirring device 1003, which is coupled to stirring motor 1001 also goes through state changes as it is associated physically (through logic in simulation) to stirring motor 1001. The control signal may provide an indication of how long a stirring process should occur. For example, control signal 1062 implements a stirring process for 10 seconds. At the end of 10 seconds, control signal 1062 may change a state of mixer motor 1001 from on to off, which may have additional effects on states of other components, including stirring device 1003.

Simultaneously with control signal 1062, control signal 1064 is generated which simulates the dilution of fluid A in mixing vessel 1030 with 30 liters of fluid B from second source vessel 1020. Control signal 1064 may be operable to change a state of control valve 1022 from closed to open. When control valve 1022 has a state of open, the states of additional components such as pipe 1021 and volume levels of second source vessel 1020 and mixing vessel 1030 will also change accordingly. Further, logical nodes associated with the fluid content of mixing vessel 1030 will change with the addition of fluid B to the volume of fluid A already present in mixing vessel 1030. Additional state changes, for example, states of the mixed fluid comprising fluid A and fluid B may change based on the mixing state of mixing motor 1001, or on other properties, such as chemical reactions between fluid A and fluid B (e.g. compound chemicals, exothermic reactions, etc.). These changes may affect other properties such as temperature or pressure within mixing vessel 1030.

Control signals 1062 and 1064 are performed simultaneously to simulate the addition of 30 liters of fluid B to 30 liters of fluid A in mixing vessel 1030, while providing 10 second of stirring action as fluid B is added. Once control signals 1062 and 1064 are performed, the logic flow proceeds to control signal 1066, labeled "Transfer". Control signal 1066 may be effective to change states of components of the system which transfer the stirred or mixed fluid in mixing vessel 1030 to receptacle vessel 1050. For example, control signal 1066 may be operable to change states of control valve 1037 from closed to open while changing a state of pump 1040 from off to on. The change of state of pump 1040 from off to on, along with the opening of control valve 1037 causes states of mixing vessel 1030, piping 1045, and receptacle vessel 1050 to change indicating the flow of the mixed fluid through pipe 1045, control valve 1037 and pump 1040 and the addition of the mixed fluid to receptacle vessel 1050 while meanwhile reducing the volume of mixed fluid in mixing vessel 1030.

### Augmenting Fluid Behavior

The system will further provide default simulation behavior for the fluids based on their properties and the configuration of the vessels and controlling nodes. The user may also want to extend the behavior of the fluids in order to incorporate that behavior into the control model or to simulate the fluid response to the devices with more detail and accuracy.

### Fluid and Vessel Properties

The physics objects representing fluids have state variables representing properties. Some of these properties are fixed for the duration of the simulation whereas others change and are updated according to the simulation's calculations. A liquid can have default properties, (e.g. density and viscosity). These properties are sufficient to determine how a liquid will move through a piping network when driven by external forces. For example, a liquid like water will have a density of 1000 *kg*/*m3* and a viscosity of 0.01 *kg*/*m · sec.* A gas may have default properties such as molar mass, temperature, and specific gas constant. Utilizing these gas properties, the pressures and other forces for the configuration of gases within the vessels may be determined.

The system allows a user to add new properties to liquid or gas physics objects to extend the functionality of the simulation. In the example shown in FIG. 11, the user has added a temperature and a salinity property to the liquid physics objects in the program. The system can use a logic element like the programming elements and liquid markers to create and assign the new properties. In this example, the temperature property is given a default value of 295 and the salinity property is given the default value of 0.0. The values for properties can be numeric or any other programmable type such as Boolean, string, structure, or array. A numeric value may be a standard integer or floating point type or other types such as a matrix, vector, complex number, quaternion, or other kind of mathematical value. The value may have a unit type such as the temperature having units of Kelvin, by way of example. Values associated with one unit may also be converted to other equivalent units such as temperature being converted to Celsius or Fahrenheit.

When a new property is assigned, the physics objects of the corresponding type will be made to possess that property. In the example, the user created liquid properties, so all the liquids will be made to have the temperature and salinity property. The initial value of the property is the default value, but the user may change any instance of the physics object to a custom property value. In the example, the user set the salinity of the liquid A to 5.0. The system would also allow Gas physics objects to have new properties as well as vessel objects including tanks and pipes. The properties of the physics objects move with each object and become a new global feature. The user does not need to write custom code to track the state of fluid in each different vessel. The properties are just part of the normal object.

When the simulation runs, fluid object can flow into one another depending on the topology of the vessels. In Figure 11, two pipes 1103, 1105 flow into a third in a tee junction 1101. When fluids meet, the system can perform mixing of the properties to create fluids with new and different properties from the original objects. The user can set up mixing rules for each of the properties in the physics object. For a liquid, the default mixing rule can be "by volume" that means the value for a mixed fluid will be based on the volume of material that is flowing into and out of that element. In the example, the rate of flow from liquid A and liquid B are equal, so the amount of salinity for the mixed liquid is halfway between the values of the original liquids. The original values are set to 0.0 (Liquid B) and 5.0 (Liquid A) so halfway would be a value 2.5. Other mixing rules would also be possible such as mixing by mass, by temperature, or by using a user-supplied formula.

User-defined custom properties for gas physics objects can also have mixing rules. The default mixing rule for gasses can be based on mass. As with liquids, the rule could be changed to a different system provided option or supplied by a user formula. Vessels can also be provided with user-defined properties. In general, these properties are used to supplement functions performed on gas or liquid physics objects.

### Fluid Functions

The system also allows the user to create custom functions and formulas that are tied directly to the fluid objects in the simulation. For many cases, the fluid can change state and come to possess different values for properties over the course of the automation process. The user may add functions that calculate how the properties change under different kinds of conditions. The function can be globally applied to all fluid physics objects so that the liquids and gasses all perform the new function and can carry out state change no matter the vessel in which they are contained.

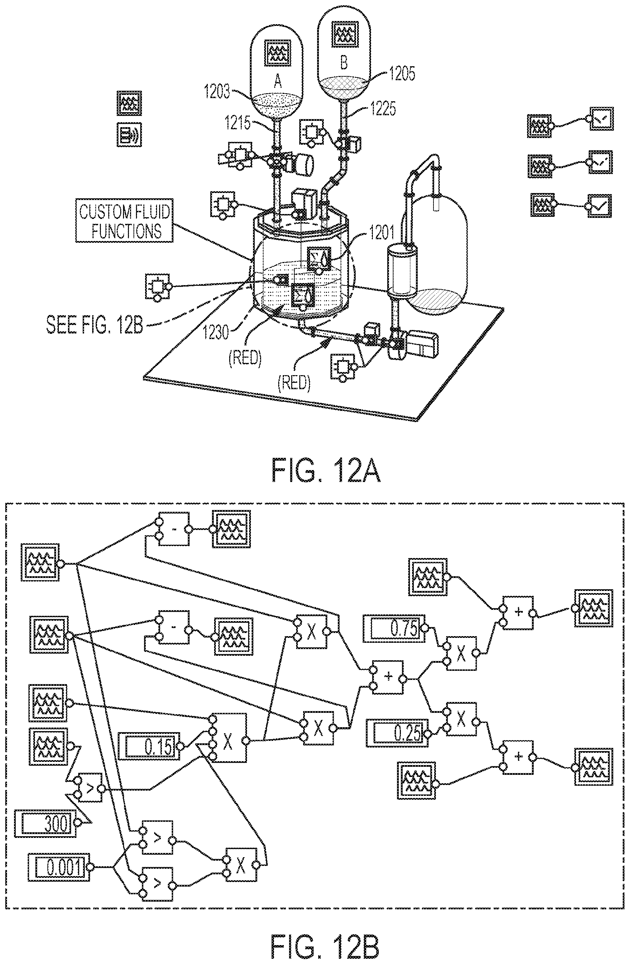

User-defined fluid function can be used to define chemical and biological reactions; changes between liquid and gaseous states; changes to default properties like density and viscosity; changes to user-defined properties; changes in temperature; propagation of properties between adjacent fluids; and many other possibilities. In FIG. 12, a function on the liquid physics objects 1201 has been added to simulate a chemical reaction between two reagents. The amount of each chemical has been set up as properties on the two input liquids 1203, 1205 and the function is applied that calculates the amount of products that are created based on the conditions of the liquid. In this function, the amount of reactants is gauged as well as the current temperature. The reaction proceeds according to the local conditions regardless of where the liquid flows. The reaction need not occur in the reactor vessel 1230 and might proceed in the piping 1215, 1225 or wherever the right conditions exist. The formula is applied globally to all liquid physics objects including those that are generated by splitting or mixing other liquid objects across branches.

The fluid formula can be used to perform simulation behaviors but it can also be used to perform user-interface behavior. In the example, a function may be added to change the simulated liquid color to red whenever a certain amount of waste product was created. The color need not be used for specific simulated effect. In this case, the color is being used to indicate to a user that the fluid needs to be filtered to remove the undesired substance. When the fluid is passed through a filter for that substance, the color changes back to its normal state automatically. Because the liquid in all regions define the color changing fluid function, the local conditions dictate the color of the liquid and the red marked liquid becomes unmarked because its local properties cause the function to evaluate differently.

Aspects of embodiments of the present invention include a programming system for engineering automation applications that is suitable, by way of example, for the process industry. Other aspects of embodiments of the present invention involve developing the logic of the program within a simulation of the devices that would be found in the actual physical plant. Other aspects of embodiments of the present invention define components representing plant devices and embody them in a 3D simulation environment. The components include a 3D model of the devices as well as internal objects that represent how the devices function both physically and logically.

Aspects of embodiments of the present invention supply user interface methods making assembly of the components simpler. For example, visually snapping together the 3D objects with pipes, valves and the like at the places where they connect in reality. The alignments and positions of the components may be determined at least partially by the system. Fluids can be assigned to vessels associated with the plant by creating a logic tile representing the fluid and assigning that tile to the modeled vessel such as a pipe or tank.

Internal functional structures of the plant are automatically determined by the connections of the plant vessels such that physics objects for the vessels and fluids are generated. The physics objects handle the simulation of the fluid motion and interaction. The simulation of the fluids is compatible with multi body motion and may calculate forces that cause objects to move in the simulation and would likewise be affected by object movement.

The user may program the devices by applying logic directly in the 3D simulation environment. Logic blocks may be assigned to actuators and sensors to associate their values with real world application behavior. Some of these logic blocks may be defined to receive inputs from external coordinators so that the overall system process may be handled automatically.

Users may add new properties to fluid and vessel objects defining new types of behavior. For example, mixing behavior between fluids that are generated by flow may be handled automatically by the system, even for user-defined properties. The fluids may be further augmented with user-defined functions that simulate behaviors such as chemical and biological reactions and other state changing actions. The fluid functions may even change the fluid's properties as depicted by user interface appearance, for example, the color or transparency of the fluid.

According to aspects of embodiments of this disclosure, a program is downloaded to the physical controller. At the physical controller, the program runs as a normal control program. Accordingly, elements of the simulation used by the control program are encoded so that the simulation still runs in the controller and its results would determine the outcome for those dependencies.

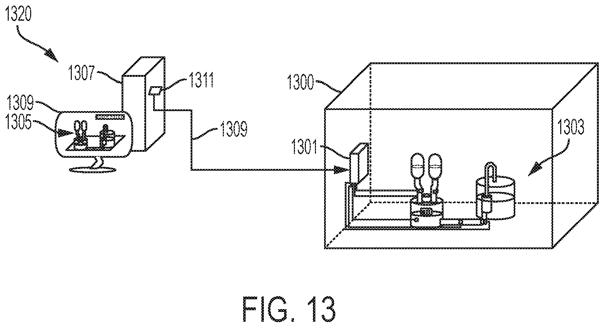

FIG. 13 is a diagram illustrating a programming in simulation system for a process plant according to aspects of the present disclosure. A process facility 1300 includes devices or components that are coupled to form a process plant 1303. The process plant 1303 may include storage vessels, mixing vessel, filters, pumps, valves, motors or servos, sensors and other physical components which work together to perform functions of the process plant 1303. In addition to physical components, process plant 1303 may be configured to receive one or more fluids and to perform processing on the one or more fluids to synthesize a desired output product. The processing may involve heating, mixing, diluting, cooling, transferring, storing, among other actions, and may include any combination of multiple actions performed simultaneously.

Devices within the process plant 1303 include control devices which may be smart devices, allowing remote operation of control components such as valves, motors, pumps and the like. A computerized control coordination application 1301 may be provided in communication with at least some of the devices or components of the process plant 1303 to monitor states of the process plant 1303 (e.g. via sensors) and process information relating to states of one or more components. Control coordination application 1301 may be configured to generate automated or supervised control signals which are communicated to control objects within the process plant 1303. Supervised control signals may be generated by a user's input, such as a command entered into a computer via an input device such as a keyboard or pointing device. Automated control signals may include control signals generated by the control coordination application 1301 itself responsive to information received by one or more components of the process plant 1303. The information may be state information of the current state of local components, or may be information relating to the overall process, such as the status of intermediate or final products that are the object of the processing plant 1303.

A 3D simulation system 1320 is coupled to the process facility 1300 by way of a communication path 1309. Communication path 1309 may be implemented as a computer network allowing communication of data 1311 from the 3D simulation system 1320 to the process facility 1300. The communication path 1309 may be hardwired through wired network connections. In other embodiments, the communication path 1309 may be wireless, allowing data to be transmitted between workstations in 3D simulation system 1320 and workstations in processing facility 1300 (e.g., a workstation hosting control application 1301).

3D simulation system 1320 may include a computer 1307 having a computer processor for receiving inputs generated by physical components of processing plant 1303 and other inputs relating to states of the processing plant 1303, such as data 1311 generated by a 3D simulation of the processing plant 1303. Computer 1307 is coupled to a display 1309, which allows a programmer/operator/engineer to render a 3D simulation containing 3D programmable objects depicting the physical components of processing plant 1303. The 3D simulation's programmable objects may be manipulated by a user via a computer input device to add, delete, modify, move and connect one or more 3D simulation objects (e.g. programmable objects). The 3D simulation system allows a user to select various 3D simulation objects and to place them within a virtual workspace. The selected 3D simulation objects may be arranged so that the 3D simulation objects displayed on display 1309 provide a virtual or digital twin 1305 of the process plant 1303.

Through computer 1307 and the 3D simulation objects creating digital twin 1305, an operator can modify the 3D simulation objects which comprise the digital twin of process plant 1303. The 3D simulation objects are programmable, meaning values and computer code associated with each 3D simulation object is available to provide a full simulation of the physical process plant 1303. 3D simulation objects may be modified while the simulation is running, allowing the user to observe the various states of the simulation process plant components as well as the states of materials or products that would be created by the physical process plant 1303 as determined by the simulation.

Because each 3D simulation object includes values and computer code which represent the state of functional capabilities of the simulated component represented by the 3D simulation object, these values or programming code may be communicated by simulation computer 1307 as data 1311 to the physical process plant control coordination application 1301 via communication path 1309. The data from the 3D simulation object is configured such that control coordination application 1301 can transfer the stored code from the simulation object to a physical component of process plant 1303 associated with the 3D simulation object providing the code. The transferred code may then be used to control actions of the physical component and provide results of the actual physical process plant 1303 that coincide with the results observed as outputs of the simulation.

The system of FIG. 13 allows a programmer to create a 3D simulation environment that mimics the size, configuration and relative positioning of each component of the physical process plant 1303 and create a virtual copy of the processing plant in a virtual environment. While the simulation application is running, modifications and programming changes can be made to the virtual process plant, which are reflected in the simulation results. Thus, during simulation, the programmer or engineer can adjust the 3D simulation objects to achieve desired results as indicated by the simulation. When the optimum results are achieved in simulation, the programming code stored in the 3D simulation objects can be transferred to their physical component counterparts. As a result, the physical process plant 1303 possesses the component states that will result in the desired outcomes based on the programmed 3D simulation objects.

A method of programming at least one control component of a process plant includes a user defining a virtual digital twin of the process plant by combining a plurality of programmable 3D simulation objects. Each programmable 3D simulation object is configured to store data, including object state data as well as programming instructions executable by a processor associated with a physical control component in a process plant. The programming instructions may be used to execute a simulation of the plurality of 3D simulation objects. In addition, the programming instructions may be transferred to a corresponding physical component of a process plant to program or reprogram operations or states of the corresponding physical component. Programmable 3D simulation objects may be programmed or altered while the simulation objects are being evaluated in a simulation operation.

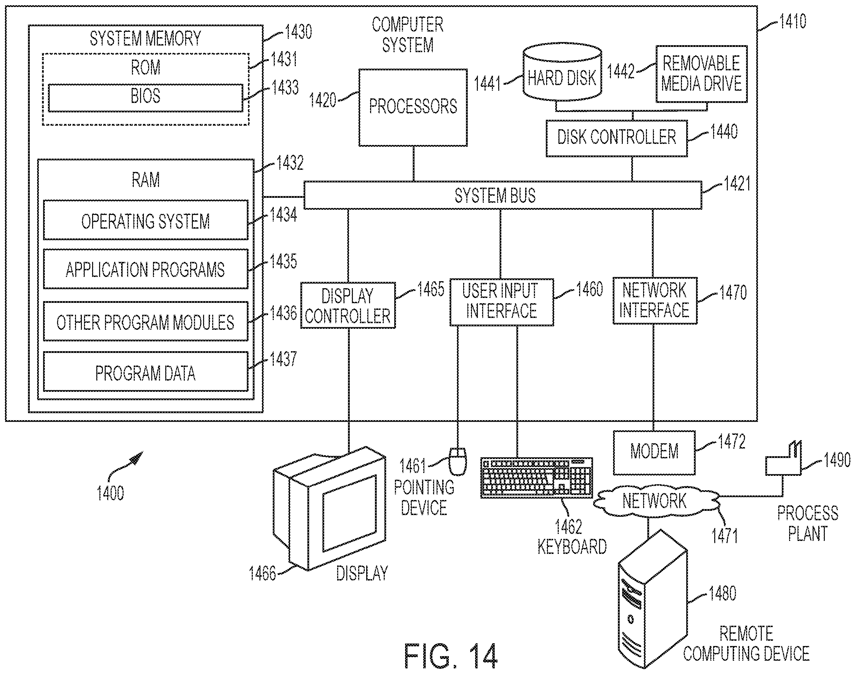

FIG. 14 illustrates an exemplary computing environment 1400 within which embodiments of the invention may be implemented. Computers and computing environments, such as computer system 1410 and computing environment 1400, are known to those of skill in the art and thus are described briefly here.

As shown in FIG. 14, the computer system 1410 may include a communication mechanism such as a system bus 1421 or other communication mechanism for communicating information within the computer system 1410. The computer system 1410 further includes one or more processors 1420 coupled with the system bus 1421 for processing the information.

The processors 1420 may include one or more central processing units (CPUs), graphical processing units (GPUs), or any other processor known in the art. More generally, a processor as used herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

Continuing with reference to FIG. 14, the computer system 1410 also includes a system memory 1430 coupled to the system bus 1421 for storing information and instructions to be executed by processors 1420. The system memory 1430 may include computer readable storage media in the form of volatile and/or nonvolatile memory, such as read only memory (ROM) 1431 and/or random access memory (RAM) 1432. The RAM 1432 may include other dynamic storage device(s) (e.g., dynamic RAM, static RAM, and synchronous DRAM). The ROM 1431 may include other static storage device(s) (e.g., programmable ROM, erasable PROM, and electrically erasable PROM). In addition, the system memory 1430 may be used for storing temporary variables or other intermediate information during the execution of instructions by the processors 1420. A basic input/output system 1433 (BIOS) containing the basic routines that help to transfer information between elements within computer system 1410, such as during start-up, may be stored in the ROM 1431. RAM 1432 may contain data and/or program modules that are immediately accessible to and/or presently being operated on by the processors 1420. System memory 1430 may additionally include, for example, operating system 1434, application programs 1435, other program modules 1436 and program data 1437.

The computer system 1410 also includes a disk controller 1440 coupled to the system bus 1421 to control one or more storage devices for storing information and instructions, such as a magnetic hard disk 1441 and a removable media drive 1442 (e.g., floppy disk drive, compact disc drive, tape drive, and/or solid state drive). Storage devices may be added to the computer system 1410 using an appropriate device interface (e.g., a small computer system interface (SCSI), integrated device electronics (IDE), Universal Serial Bus (USB), or FireWire).

The computer system 1410 may also include a display controller 1465 coupled to the system bus 1421 to control a display or monitor 1466, such as a cathode ray tube (CRT) or liquid crystal display (LCD), for displaying information to a computer user. The computer system includes an input interface 1460 and one or more input devices, such as a keyboard 1462 and a pointing device 1461, for interacting with a computer user and providing information to the processors 1420. The pointing device 1461, for example, may be a mouse, a light pen, a trackball, or a pointing stick for communicating direction information and command selections to the processors 1420 and for controlling cursor movement on the display 1466. The display 1466 may provide a touch screen interface which allows input to supplement or replace the communication of direction information and command selections by the pointing device 1461.

The computer system 1410 may perform a portion or all of the processing steps of embodiments of the invention in response to the processors 1420 executing one or more sequences of one or more instructions contained in a memory, such as the system memory 1430. Such instructions may be read into the system memory 1430 from another computer readable medium, such as a magnetic hard disk 1441 or a removable media drive 1442. The magnetic hard disk 1441 may contain one or more datastores and data files used by embodiments of the present invention. Datastore contents and data files may be encrypted to improve security. The processors 1420 may also be employed in a multi-processing arrangement to execute the one or more sequences of instructions contained in system memory 1430. In alternative embodiments, hard-wired circuitry may be used in place of or in combination with software instructions. Thus, embodiments are not limited to any specific combination of hardware circuitry and software.

As stated above, the computer system 1410 may include at least one computer readable medium or memory for holding instructions programmed according to embodiments of the invention and for containing data structures, tables, records, or other data described herein. The term "computer readable medium" as used herein refers to any medium that participates in providing instructions to the processors 1420 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 1441 or removable media drive 1442. Non-limiting examples of volatile media include dynamic memory, such as system memory 1430. Non-limiting examples of transmission media include coaxial cables, copper wire, and fiber optics, including the wires that make up the system bus 1421. Transmission media may also take the form of acoustic or light waves, such as those generated during radio wave and infrared data communications.

The computing environment 1400 may further include the computer system 1410 operating in a networked environment using logical connections to one or more remote computers, such as remote computing device 1480. Remote computing device 1480 may be a personal computer (laptop or desktop), a mobile device, a server, a router, a network PC, a peer device or other common network node, and typically includes many or all of the elements described above relative to computer system 1410. When used in a networking environment, computer system 1410 may include modem 1472 for establishing communications over a network 1471, such as the Internet. Modem 1472 may be connected to system bus 1421 via user network interface 1470, or via another appropriate mechanism.

Network 1471 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 1410 and other computers (e.g., remote computing device 1480). According to embodiments, a process plant 1490 may be in communication with the computer system 1410 via network 1471. Sensors within process plant 1490 may measure states of the process plant 1490 and communicate states and values measured to computer system 1410. The network 1471 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 1471.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof. No claim element herein is to be construed under the provisions of 35 U.S.C. 112, sixth paragraph, unless the element is expressly recited using the phrase "means for."

## Claims

1. A method for programming with a 3D simulation system (1320) a physical component of a process plant (1303), wherein the process plant (1303) includes at least one fluid vessel (103, 501); at least one pipe (401, 507) coupled to the at least one fluid vessel (103, 501); and at least one control device (503) coupled to the at least one pipe (401, 507) and configured to control flow of a fluid (505) to or from the at least one fluid vessel (103, 501) via the at least one pipe (401, 507), wherein the 3D simulation system (1320) comprises a 3D workspace containing a plurality of 3D programmable simulation objects, each of the plurality of 3D programmable simulation objects corresponding to a physical component of the process plant (1303), the method comprising:
identifying a plurality of physical components of the process plant (1303);
coupling the process plant (1303) to the 3D simulation system (1320);
defining at least one 3D programmable simulation object which describes attributes of the physical components, wherein the 3D programmable simulation object includes programming code relating to operation of the physical component, and at least one physics object representative of a state of fluid materials present in the process plant;
placing a plurality of 3D programmable simulation objects in the 3D workspace of the 3D simulation system (1320);
automatically determining internal functional structures of the process plant (1303) by the connections of the vessels of the process plant (1303) and generating physics objects for the fluid materials and the vessels of the process plant (1303), the physics objects handling simulation of the fluid motion and interaction;
performing a simulation on a plurality of 3D programmable simulation objects of the 3D simulation system (1320); and
transferring the programming code of at least one of the 3D programmable simulation objects to a corresponding physical component of the process plant (1303).

2. The method of claim 1, wherein the plurality of physical components of the processing plant (1303) comprise control components.

3. The method of claim 1, wherein coupling the process plant (1303) to the 3D simulation system (1320) comprises:
coupling each of a plurality of process plant components to a process control application (1301) of the process plant (1303);
establishing a communication path (1309) between the process control application (1301) and a computer processor of the 3D simulation system, wherein the computer processor of the 3D simulation system is configured to transfer programming code contained in at least one 3D simulation object to a corresponding physical component of the process plant via the communication link (1309) and the process control application (1301).

4. The method of claim 1, wherein performing a simulation on a plurality of 3D programmable simulation objects comprises:
defining a 3D programmable simulation object corresponding to each physical component of the process plant (1303).

5. The method of claim 4, further comprising:
arranging, in the 3D simulation workspace, the 3D programmable simulation objects corresponding to each physical component of the process plant (1303) so that each 3D programmable simulation object is positioned in the 3D simulation workspace proportional to the physical position of the corresponding physical component in the process plant (1303).

6. The method of claim 5, further comprising:
running a simulation application on the 3D programmable simulation objects in the 3D simulation workspace; and
altering at least one of a property or programming code of at least one of the 3D programmable simulation objects while the simulation application is running.

7. The method of claim 6, further comprising:
comparing a result of the simulation application with a desired result;
altering the programming code of at least one of the 3D programmable simulation objects based on a difference between the simulation result and the desired result.

8. A programmable process plant system comprising:
a process plant (1303) comprising a plurality of physical process components,
wherein the process plant (1303) includes at least one fluid vessel (103, 501); at least one pipe (401, 507) coupled to the at least one fluid vessel (103, 501); and at least one control device (503) coupled to the at least one pipe (401, 507) and configured to control flow of a fluid (505) to or from the at least one fluid vessel (103, 501) via the at least one pipe (401, 507);
a control application (1301) in communication with at least one of the plurality of physical process components;
a 3D simulation system (1320) comprising a 3D workspace containing a plurality of 3D programmable simulation objects, each of the plurality of programmable 3D simulation objects corresponding to a physical process component of the process plant (1303), wherein each of the 3D programmable simulation objects includes programming code relating to operation of the corresponding physical process component, and wherein the 3D simulation system (1320) is in communication with the control application (1301), and wherein the 3D simulation system (1320) is configured for programming at least one of the physical process components of the process plant (1303) according to the method of any of claims 1 to 7.

9. The programmable process plant of claim 8, wherein the process plant (1303) further comprises:
at least one fluid vessel (103, 501);
at least one pipe (401, 507) coupled to the at least one fluid vessel (103, 501); and
at least one control device (503) coupled to the at least one pipe (401, 507), the at least one control device (503) configured to control flow of a fluid (505) to or from the at least one fluid vessel (103, 501) via the at least one pipe (401, 507).

10. The programmable process plant of claim 9, wherein the at least one control device (503) comprises a remotely operable actuator configured to receive a control signal (1060), and responsive to the control signal (1060), alter a state of the control device (503).

11. The programmable process plant of claim 8, wherein the 3D simulation system (1320) further comprises:
a 3D programmable simulation object corresponding to a control device (503) of the process plant (1303), the 3D programmable simulation object corresponding to the control device (503) of the process plant (1303) comprising programming code, the programming code operative to simulate the operation of the corresponding control device (503) during a simulation operation of the 3D simulation system (1320) and wherein the programming code is configured to be transferred to the corresponding control device (503) of the process plant (1303) and the programming code being executable by a remotely operable actuator of the control device (503) to alter a state of the control device (503).

12. The programmable process plant of claim 11, the 3D simulation system (1302) further comprising:
a second 3D programmable simulation object corresponding to a fluid vessel (103, 501), the second 3D programmable simulation object comprising programming code for performing fluid simulation.

13. The programmable process plant of claim 12, wherein responsive to a user input for moving the second 3D programmable simulation object, a simulated fluid contained within the simulated fluid vessel (103, 501) associated with the second 3D programmable simulation object moves consistent with the movement of the second 3D programmable simulation object.

14. The programmable process plant of claim 8, wherein the control application (1301) is configured to receive programmable code from at least one 3D programmable simulation object of the 3D simulation system (1320) and transfer the received programmable code to at least one of the physical process components.

15. The programmable process plant of claim 14, wherein the received programmable code is operable to simulate the at least one of the physical process components in the 3D simulation system (1320) and to provide instructions for operation of the at least one physical process component.

## Patentansprüche

1. Verfahren zum Programmieren mit einem 3D-Simulationssystem (1320) einer physikalischen Komponente einer Prozessanlage (1303), wobei die Prozessanlage (1303) mindestens einen Fluidbehälter (103, 501); mindestens eine Rohrleitung (401, 507), die an den mindestens einen Fluidbehälter (103, 501) gekoppelt ist; und mindestens eine Steuervorrichtung (503), die an die mindestens eine Rohrleitung (401, 507) gekoppelt ist und konfiguriert ist, einen Strom eines Fluids (505) zu oder von dem mindestens einen Fluidbehälter (103, 501) durch die mindestens eine Rohrleitung (401, 507) zu steuern, enthält, wobei das 3D-Simulationssystem (1320) einen 3D-Arbeitsraum umfasst, der mehrere 3D-programmierbare Simulationsobjekte enthält, wobei jedes der mehreren 3D-programmierbaren Simulationsobjekte einer physikalischen Komponente der Prozessanlage (1303) entspricht, wobei das Verfahren Folgendes umfasst:
Identifizieren mehrerer physikalischer Komponenten der Prozessanlage (1303);
Koppeln der Prozessanlage (1303) an das 3D-Simulationssystem (1320);
Definieren mindestens eines 3D-programmierbaren Simulationsobjekts, das Attribute der physikalischen Komponenten beschreibt, wobei das 3D-programmierbare Simulationsobjekt Programmiercode, der sich auf den Betrieb der physikalischen Komponente bezieht, und mindestens ein Physikobjekt, das einen Zustand eines Fluidmaterials, das in der Prozessanlage vorhanden ist, repräsentiert, enthält;
Positionieren mehrerer 3D-programmierbarer Simulationsobjekte in dem 3D-Arbeitsraum des 3D-Simulationssystems (1320);
automatisches Bestimmen interner funktionaler Strukturen der Prozessanlage (1303) durch die Verbindungen der Behälter der Prozessanlage (1303) und Erzeugen von Physikobjekten für die Fluidmaterialien und die Behälter der Prozessanlage (1303), wobei die Physikobjekte eine Simulation der Fluidbewegung und -interaktion behandeln;
Ausführen einer Simulation an mehreren 3D-programmierbaren Simulationsobjekten des 3D-Simulationssystems (1320); und
Übertragen des Programmiercodes mindestens eines der 3D-programmierbaren Simulationsobjekte auf eine entsprechende physikalische Komponente der Prozessanlage (1303).

2. Verfahren nach Anspruch 1, wobei die mehreren physikalischen Komponenten der Prozessanlage (1303) Steuerkomponenten umfassen.

3. Verfahren nach Anspruch 1, wobei das Koppeln der Prozessanlage (1303) an das 3D-Simulationssystem (1320) Folgendes umfasst:
Koppeln jeder von mehreren Prozessanlagenkomponenten an eine Prozesssteueranwendung (1301) der Prozessanlage (1303);
Einrichten eines Kommunikationswegs (1309) zwischen der Prozesssteueranwendung (1301) und einem Computerprozessor des 3D-Simulationssystems, wobei der Computerprozessor des 3D-Simulationssystems konfiguriert ist, Programmiercode, der in mindestens einem 3D-Simulationsobjekt enthalten ist, auf eine entsprechende physikalische Komponente der Prozessanlage über die Kommunikationsverbindung (1309) und die Prozesssteueranwendung (1301) zu übertragen.

4. Verfahren nach Anspruch 1, wobei das Ausführen einer Simulation an mehreren 3D-programmierbaren Simulationsobjekten Folgendes umfasst:
Definieren eines 3D-programmierbaren Simulationsobjekts, das jeder physikalischen Komponente der Prozessanlage (1303) entspricht.

5. Verfahren nach Anspruch 4, das ferner Folgendes umfasst:
Anordnen in dem 3D-Simulationsarbeitsraum der 3D-programmierbaren Simulationsobjekte, die jeder physikalischen Komponente der Prozessanlage (1303) entsprechen, so dass jedes 3D-programmierbare Simulationsobjekt in dem 3D-Simulationsarbeitsraum proportional zu der physikalischen Position der entsprechenden physikalischen Komponente in der Prozessanlage (1303) positioniert ist.

6. Verfahren nach Anspruch 5, das ferner Folgendes umfasst:
Ausführen einer Simulationsanwendung an den 3D-programmierbaren Simulationsobjekten in dem 3D-Simulationsarbeitsraum; und
Ändern einer Eigenschaft und/oder eines Programmiercodes mindestens eines der 3D-programmierbaren Simulationsobjekte, während die Simulationsanwendung läuft.

7. Verfahren nach Anspruch 6, das ferner Folgendes umfasst:
Vergleichen eines Ergebnisses der Simulationsanwendung mit einem gewünschten Ergebnis;
Ändern des Programmiercodes mindestens eines der 3D-programmierbaren Simulationsobjekte anhand eines Unterschieds zwischen dem Simulationsergebnis und dem gewünschten Ergebnis.

8. Programmierbares Prozessanlagensystem, das Folgendes umfasst:
eine Prozessanlage (1303), die mehrere physikalische Prozesskomponenten umfasst,
wobei die Prozessanlage (1303) mindestens einen Fluidbehälter (103, 501); mindestens eine Rohrleitung (401, 507), die an den mindestens einen Fluidbehälter (103, 501) gekoppelt ist; und mindestens eine Steuervorrichtung (503), die an die mindestens eine Rohrleitung (401, 507) gekoppelt ist und konfiguriert ist, einen Strom eines Fluids (505) zu oder von dem mindestens einen Fluidbehälter (103, 501) durch die mindestens eine Rohrleitung (401, 507) zu steuern, enthält,
eine Steueranwendung (1301) in Kommunikation mit mindestens einer der mehreren physikalischen Prozesskomponenten;
ein 3D-Simulationssystem (1320), das einen 3D-Arbeitsraum umfasst, der mehrere 3D-programmierbare Simulationsobjekte enthält, wobei jedes der mehreren programmierbaren 3D-Simulationsobjekte einer physikalischen Prozesskomponente der Prozessanlage (1303) entspricht, wobei jedes der 3D-programmierbaren Simulationsobjekte Programmiercode enthält, der sich auf den Betrieb der entsprechenden physikalischen Prozesskomponente bezieht, und wobei das 3D-Simulationssystem (1320) mit der Steueranwendung (1301) in Kommunikation ist und wobei das 3D-Simulationssystem (1320) konfiguriert ist, mindestens eine der physikalischen Prozesskomponenten der Prozessanlage (1303) gemäß dem Verfahren nach einem der Ansprüche 1 bis 7 zu programmieren.

9. Programmierbare Prozessanlage nach Anspruch 8, wobei die Prozessanlage (1303) ferner Folgendes umfasst:
mindestens einen Fluidbehälter (103, 501);
mindestens eine Rohrleitung (401, 507), die an den mindestens einen Fluidbehälter (103, 501) gekoppelt ist; und
mindestens eine Steuervorrichtung (503), die an die mindestens eine Rohrleitung (401, 507) gekoppelt ist, wobei die mindestens eine Steuervorrichtung (503) konfiguriert ist, einen Strom eines Fluids (505) zu oder von dem mindestens einen Fluidbehälter (103, 501) durch die mindestens eine Rohrleitung (401, 507) zu steuern.

10. Programmierbare Prozessanlage nach Anspruch 9, wobei die mindestens eine Steuervorrichtung (503) ein fernbedienbares Bedienungselement umfasst, das konfiguriert ist, ein Steuersignal (1060) zu empfangen und in Reaktion auf das Steuersignal (1060) einen Zustand der Steuervorrichtung (503) zu ändern.

11. Programmierbare Prozessanlage nach Anspruch 8, wobei das 3D-Simulationssystem (1320) ferner Folgendes umfasst:
ein 3D-programmierbares Simulationsobjekt, das einer Steuervorrichtung (503) der Prozessanlage (1303) entspricht, wobei das 3D-programmierbare Simulationsobjekt, das der Steuervorrichtung (503) der Prozessanlage (1303) entspricht, Programmiercode umfasst, wobei der Programmiercode bewirkt, den Betrieb der entsprechenden Steuervorrichtung (503) während eines Simulationsvorgangs des 3D-Simulationssystems (1320) zu simulieren, und wobei der Programmiercode konfiguriert ist, auf die entsprechende Steuervorrichtung (503) der Prozessanlage (1303) übertragen zu werden, und der Programmiercode durch ein fernbedienbares Bedienungselement der Steuervorrichtung (503) ausführbar ist, um einen Zustand der Steuervorrichtung (503) zu ändern.

12. Programmierbare Prozessanlage nach Anspruch 11, wobei das 3D-Simulationssystem (1302) ferner Folgendes umfasst:
ein zweites 3D-programmierbares Simulationsobjekt, das einem Fluidbehälter (103, 501) entspricht, wobei das zweite 3D-programmierbare Simulationsobjekt Programmiercode zum Ausführen einer Fluidsimulation umfasst.

13. Programmierbare Prozessanlage nach Anspruch 12, wobei ein simuliertes Fluid, das in dem simulierten Fluidbehälter (103, 501) enthalten ist, der dem zweiten 3D-programmierbaren Simulationsobjekt zugeordnet ist, in Reaktion auf eine Anwendereingabe zum Bewegen des zweiten 3D-programmierbaren Simulationsobjekts sich in Übereinstimmung mit der Bewegung des zweiten 3D-programmierbaren Simulationsobjekts bewegt.

14. Programmierbare Prozessanlage nach Anspruch 8, wobei die Steueranwendung (1301) konfiguriert ist, programmierbaren Code von mindestens einem 3D-programmierbaren Simulationsobjekt des 3D-Simulationssystems (1320) zu empfangen und den empfangenen programmierbaren Code auf mindestens eine der physikalischen Prozesskomponenten zu übertragen.

15. Programmierbare Prozessanlage nach Anspruch 14, wobei der empfangene programmierbare Code bewirkt, die mindestens eine der physikalischen Prozesskomponenten in dem 3D-Simulationssystem (1320) zu simulieren und Anweisungen für den Betrieb der mindestens einen physikalischen Prozesskomponente bereitzustellen.

## Revendications

1. Procédé de programmation, à l'aide d'un système de simulation 3D (1320), d'un composant physique d'une installation de processus (1303), l'installation de processus (1303) comportant au moins un récipient pour fluide (103, 501) ; au moins un tuyau (401, 507) couplé à l'au moins un récipient pour fluide (103, 501) ; et au moins un dispositif de régulation (503) couplé à l'au moins un tuyau (401, 507) et configuré pour réguler l'écoulement d'un fluide (505) vers ou depuis l'au moins un récipient pour fluide (103, 501) via l'au moins un tuyau (401, 507), le système de simulation 3D (1320) comprenant un espace de travail 3D contenant une pluralité d'objets de simulation 3D programmables, chacun de la pluralité d'objets de simulation 3D programmables correspondant à un composant physique de l'installation de processus (1303), le procédé comprenant :
l'identification d'une pluralité de composants physiques de l'installation de processus (1303) ;
le couplage de l'installation de processus (1303) au système de simulation 3D (1320) ;
la définition d'au moins un objet de simulation 3D programmable qui décrit des attributs des composants physiques, l'objet de simulation 3D programmable comportant un code de programmation lié au fonctionnement du composant physique, et au moins un objet physique représentant un état de matériaux fluides présents dans l'installation de processus ;
le placement d'une pluralité d'objets de simulation 3D programmables dans l'espace de travail 3D du système de simulation 3D (1320) ;
la détermination automatique de structures fonctionnelles internes de l'installation de processus (1303) par les liaisons des récipients de l'installation de processus (1303) et la génération d'objets physiques pour les matériaux fluides et les récipients de l'installation de processus (1303), les objets physiques gérant la simulation du mouvement de fluides et de leur interaction ;
la réalisation d'une simulation sur une pluralité d'objets de simulation 3D programmables du système de simulation 3D (1320) ; et
le transfert du code de programmation d'au moins un des objets de simulation 3D programmables vers un composant physique correspondant de l'installation de processus (1303).

2. Procédé selon la revendication 1, la pluralité de composants physiques de l'installation de processus (1303) comprenant des composants de régulation.

3. Procédé selon la revendication 1, le couplage de l'installation de processus (1303) au système de simulation 3D (1320) comprenant :
le couplage de chacun d'une pluralité de composants de l'installation de processus à une application de régulation de processus (1301) de l'installation de processus (1303) ;
l'établissement d'un chemin de communication (1309) entre l'application de régulation de processus (1301) et un processeur d'ordinateur du système de simulation 3D, le processeur d'ordinateur du système de simulation 3D étant configuré pour transférer un code de programmation contenu dans au moins un objet de simulation 3D vers un composant physique correspondant de l'installation de processus via la liaison de communication (1309) et l'application de régulation de processus (1301).

4. Procédé selon la revendication 1, la réalisation d'une simulation sur une pluralité d'objets de simulation 3D programmables comprenant :
la définition d'un objet de simulation 3D programmable correspondant à chaque composant physique de l'installation de processus (1303).

5. Procédé selon la revendication 4, comprenant en outre :
l'agencement, dans l'espace de travail de simulation 3D, des objets de simulation 3D programmables correspondant à chaque composant physique de l'installation de processus (1303) de sorte que chaque objet de simulation 3D programmable soit positionné dans l'espace de travail de simulation 3D proportionnellement à la position physique du composant physique correspondant dans l'installation de processus (1303).

6. Procédé selon la revendication 5, comprenant en outre :
l'exécution d'une application de simulation sur les objets de simulation 3D programmables dans l'espace de travail de simulation 3D ; et
la modification d'une propriété et/ou d'un code de programmation d'au moins un des objets de simulation 3D programmables pendant l'exécution de l'application de simulation.

7. Procédé selon la revendication 6, comprenant en outre :
la comparaison d'un résultat de l'application de simulation à un résultat souhaité ;
la modification du code de programmation d'au moins un des objets de simulation 3D programmables sur la base d'une différence entre le résultat de simulation et le résultat souhaité.

8. Système d'installation de processus programmable, comprenant :
une installation de processus (1303) comprenant une pluralité de composants de processus physiques,
l'installation de processus (1303) comportant au moins un récipient pour fluide (103, 501) ; au moins un tuyau (401, 507) couplé à l'au moins un récipient pour fluide (103, 501) ; et au moins un dispositif de régulation (503) couplé à l'au moins un tuyau (401, 507) et configuré pour réguler l'écoulement d'un fluide (505) vers ou depuis l'au moins un récipient pour fluide (103, 501) via l'au moins un tuyau (401, 507) ;
une application de régulation (1301) en communication avec au moins un de la pluralité de composants de processus physiques ;
un système de simulation 3D (1320) comprenant un espace de travail 3D contenant une pluralité d'objets de simulation 3D programmables, chacun de la pluralité d'objets de simulation 3D programmables correspondant à un composant de processus physique de l'installation de processus (1303), chacun des objets de simulation 3D programmables comportant un code de programmation lié au fonctionnement du composant de processus physique correspondant, et le système de simulation 3D (1320) étant en communication avec l'application de régulation (1301), et le système de simulation 3D (1320) étant configuré pour programmer au moins un des composants de processus physiques de l'installation de processus (1303) conformément au procédé selon l'une quelconque des revendications 1 à 7.

9. Installation de processus programmable selon la revendication 8, l'installation de processus (1303) comprenant en outre :
au moins un récipient pour fluide (103, 501) ;
au moins un tuyau (401, 507) couplé à l'au moins un récipient pour fluide (103, 501) ; et
au moins un dispositif de régulation (503) couplé à l'au moins un tuyau (401, 507), l'au moins un dispositif de régulation (503) étant configuré pour réguler l'écoulement d'un fluide (505) vers ou depuis l'au moins un récipient pour fluide (103, 501) via l'au moins un tuyau (401, 507).

10. Installation de processus programmable selon la revendication 9, l'au moins un dispositif de régulation (503) comprenant un actionneur pilotable à distance configuré pour recevoir un signal de régulation (1060) et, en réponse au signal de régulation (1060), modifier un état du dispositif de régulation (503).

11. Installation de processus programmable selon la revendication 8, le système de simulation 3D (1320) comprenant en outre :
un objet de simulation 3D programmable correspondant à un dispositif de régulation (503) de l'installation de processus (1303), l'objet de simulation 3D programmable correspondant au dispositif de régulation (503) de l'installation de processus (1303) comprenant un code de programmation, le code de programmation étant exploitable pour simuler le fonctionnement du dispositif de régulation (503) correspondant au cours d'une opération de simulation du système de simulation 3D (1320) et le code de programmation étant configuré pour être transféré vers le dispositif de régulation (503) correspondant de l'installation de processus (1303) et le code de programmation étant exécutable par un actionneur pilotable à distance du dispositif de régulation (503) pour modifier un état du dispositif de régulation (503).

12. Installation de processus programmable selon la revendication 11, le système de simulation 3D (1302) comprenant en outre :
un deuxième objet de simulation 3D programmable correspondant à un récipient pour fluide (103, 501), le deuxième objet de simulation 3D programmable comprenant un code de programmation pour réaliser une simulation de fluide.

13. Installation de processus programmable selon la revendication 12, en réponse à une entrée utilisateur destinée à déplacer le deuxième objet de simulation 3D programmable, un fluide simulé contenu dans le récipient pour fluide (103, 501) simulé associé au deuxième objet de simulation 3D programmable se déplaçant en accord avec le déplacement du deuxième objet de simulation 3D programmable.

14. Installation de processus programmable selon la revendication 8, l'application de régulation (1301) étant configurée pour recevoir un code programmable depuis au moins un objet de simulation 3D programmable du système de simulation 3D (1320) et transférer le code programmable reçu vers au moins un des composants de processus physiques.

15. Installation de processus programmable selon la revendication 14, le code programmable reçu étant exploitable pour simuler l'au moins un des composants de processus physiques dans le système de simulation 3D (1320) et pour fournir des instructions pour le fonctionnement de l'au moins un composant de processus physique.
